# FASCICULE DE BREVET EUROPEEN

(11) **EP 0 665 511 B1**
(45) Date de publication et mention de la délivrance du brevet: **30.08.2000**
(21) Numéro de dépôt: 95400191.3
(22) Date de dépôt: 27.01.1995
(51) Int. Cl.: G06K 19/077

(54) **Procédé de protection des plots de contacts d'une carte à mémoire**
Verfahren zum Schützen von Kontaktflächen einer Speicherkarte
Method for protecting contact pads of a memory card

(30) Priorité: 01.02.1994 FR 9401092
(43) Date de publication de la demande: 02.08.1995
(73) Titulaire: GEMPLUS CARD INTERNATIONAL, F-13420 Gemenos (FR)
(72) Inventeur: Turin, Joel, Cabinet Ballot Schmit, F-75116 Paris (FR); Berlin, Eric, Cabinet Ballot Schmit, F-75116 Paris (FR)
(74) Mandataire: Schmit, Christian Norbert Marie

(56) Documents cités:
- GB-A- 2 149 209
- US-A- 4 780 791
- US-A- 5 121 294
- PATENT ABSTRACTS OF JAPAN vol. 10, no. 354 (P-521) 28 Novembre 1986 & JP 61 151 791 A (HITACHI) 10 Juillet 1986
- PATENT ABSTRACTS OF JAPAN vol. 13, no. 446 (M-877) 06 Octobre 1989 & JP 01 171 992 A (IBIDEN CO LTD) 06 Juillet 1989

## Description

L'invention concerne un procédé de protection des plots de contact d'une carte à mémoire. Les cartes à mémoire visées par la présente invention sont destinées à la réalisation de diverses opérations, telles que, par exemple, des opérations bancaires, des communications téléphoniques, ou diverses opérations d'identification. Ces opérations s'effectuent grâce à un couplage électrique entre un module électronique de la carte, et un appareil de lecture/écriture extérieur à la carte. L'ensemble des plots de contact forme une interface de contact entre le module électronique et l'appareil de lecture/écriture.

Ces plots sont habituellement réalisés par une technique de gravure. Selon cette technique, on dépose ou on colle une couche de métal sur un film support diélectrique, par exemple, commercialisé sous l'appellation KAPTON, ou alors, en verre-époxy ou en polyester. Cette couche, qui est destinée à former les plots de contact, est composée de cuivre ou d'un alliage métallique. On dépose ensuite, sur la couche de métal précitée, une couche de matériau photo-résistant. On insole cette couche de matériau photo-résistant au travers d'un masque dont le dessin est complémentaire des plots que l'on veut réaliser. Après révélation du film photographique et attaque chimique, on obtient une structure de trois couches superposées, où la dernière couche est constituée par le matériau photo-résistant à l'image des plots. Il suffit alors de détruire sélectivement le métal qui n'est pas recouvert du matériau photo-résistant, puis d'enlever le matériau photo-résistant en excédent, afin d'obtenir l'ensemble de plots conforme au masque précité.

Tels qu'ils sont réalisés actuellement, les plots de contact affleurent à la surface de la carte. Ils sont ainsi disposés côte-à-côte, et sont séparés les uns des autres par des espaces vides. Ces espaces vides assurent l'isolement électrique de chaque plot par rapport aux autres. Un plot constitue ainsi une entité physico-fonctionnelle à part entière.

Néanmoins, au cours d'un usage normal de la carte à mémoire, de multiples corps étrangers peuvent s'intercaler, entre les chants des plots, dans les espaces vides. Dans le cas où ces corps étrangers sont des conducteurs électriques qui relient entre eux les chants de plots différents, une fuite de courant peut se créer, voire un court-circuit. La carte à mémoire ne fonctionne alors plus normalement.

Parmi ces corps étrangers, on citera, par exemple, les mines en graphite de crayons à papier, les copeaux métalliques, mais aussi les boissons sucrées ou la transpiration des mains.

Les problèmes engendrés par la présence de ces corps étrangers sont tels qu'il semble difficile, pour les fournisseurs de cartes à mémoire, de garantir le fonctionnement de leurs cartes autrement que dans un environnement très propre.

GB-A-2 149 209 propose déjà un procédé de protection des plots de contact d'un micromodule où l'on introduit un isolant dans les espaces vides entre les plots de contact avant la mise en place du micromodule dans le corps de carte. L'isolant protège aussi le circuit et les connections.

Aussi, la présente invention a pour but de proposer un procédé de protection des plots de contact d'une carte à mémoire, qui pallie les inconvénients précités, et qui permette, en particulier, d'obtenir simplement et à moindre coût, des cartes à mémoire protégées des dysfonctionnements induits par la présence de corps étrangers entre ses plots de contact, ledit procédé étant par ailleurs applicable à la fabrication de cartes en grande série.

Ce but, ainsi que d'autres qui apparaîtront par la suite, sont atteints grâce à un procédé de protection des plots de contact électriquement conducteurs d'une carte à mémoire, lesdits plots de contact étant disposés côte-à-côte, affleurant à la surface de ladite carte, et séparés les uns des autres par des espaces vides, caractérisé en ce qu'on introduit un isolant dans chacun de ces espaces vides, de manière à recouvrir les chants des plots de contact qui se font face dans ces espaces.

La description qui va suivre et qui ne présente aucun caractère limitatif, permettra de mieux comprendre la manière dont l'invention peut être mise en pratique.

Elle doit être lue au regard des dessins annexés, dans lesquels :
- la figure 1 représente, en perspective, une portion d'une carte à mémoire et ses plots de contact ;
- la figure 2 montre, en coupe transversale, l'espace vide situé entre deux plots de contact d'une carte à mémoire, avant que l'on ait procédé au traitement selon l'invention ;
- la figure 3 illustre, en coupe transversale, les plots de contact d'une carte à mémoire, protégés selon un mode de mise en oeuvre du procédé selon l'invention ; et
- la figure 4 illustre, en coupe transversale, les plots de contact d'une carte à mémoire protégés selon un autre mode de mise en oeuvre du procédé selon l'invention.

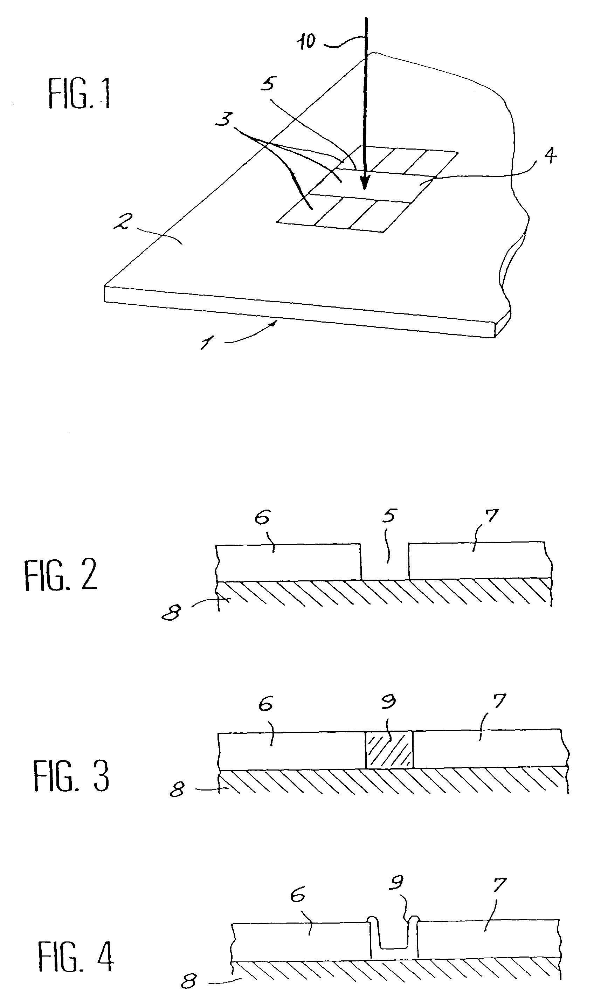

La figure 1 représente une portion de carte à mémoire 1.

Une telle carte comporte un corps de carte 2 et un module électronique. Les dimensions de cette carte sont normalisées. Par exemple, la norme ISO 7810 correspond à une carte dont le corps est formé d'un assemblage de feuilles thermoplastiques au format standard de 85 mm de longueur, de 54 mm de largeur, et de 0,76 mm d'épaisseur.

Le module électronique est noyé dans le corps de carte 2. Ses dimensions sont sensiblement plus réduites que le corps de carte 2. Le module comprend notamment une puce à circuit intégré. Cette puce comporte, dans un exemple, six bornes utiles de connexion reliées chacune, par un fil conducteur, à un plot de contact. On a donc au moins six plots de contact par carte.

A la figure 1, on a representé sept plots de contact 3 : un plot central 4 et six plots périphériques. Cependant, les cartes à mémoire actuelles comportent en outre deux plots supplémentaires. Ceux-ci ne sont en général pas reliés à la puce. Dans les cartes mixtes, qui fonctionnent à la fois par contact et sans contact, ces deux plots supplémentaires peuvent servir d'interface de connexion entre la puce et une antenne de la carte.

Les plots de contact 3 sont disposés côte-à-côte et affleurent à la surface de la carte 1. La puce est située à proximité du plot central 4, au dessous de celui-ci, dans le corps de carte 2. L'ensemble puce et fils conducteurs est, par exemple, enrobé dans une résine protectrice.

L'ensemble des plots de contact 3 est constitué, en général, de matériaux conducteurs électriquement. Dans ce cas, ces matériaux peuvent être du cuivre, du nickel, de l'or, un alliage Ni-Pd par exemple. Toutefois, le plot central 4 peut être en plastique.

Les plots de contact 3 sont séparés les uns des autres par des espaces vides 5. La figure 2 montre, en coupe transversale et en vue agrandie, un espace vide 5 qui sépare deux plots de contact 6 et 7 électriquement conducteurs.

Ces plots 6 et 7 sont portés par un support isolant 8, qui peut être le corps de carte 2 lui-même, mais qui est de préférence un film déposé sur ce corps 2, en dessous des plots 3 et qui a servi à supporter lesdits plots au moment de leur gravure.

Les plots de contact 6 et 7 sont plans. Ils ont une surface de l'ordre de 0,5 cm² et une épaisseur de l'ordre du dixième de millimètre.

De même, la profondeur des espaces vides 5 est égale à l'épaisseur des plots 6 et 7. Par contre, la largeur de ces espaces vides 5 est de l'ordre du dixième de millimètre.

Selon l'invention, on introduit un isolant dans chacun des espaces vides 5, de manière à recouvrir les chants des plots de contact 6 et 7 qui se font face dans ces espaces 5.

L'isolant 9 est introduit dans une étape ultérieure à la fabrication du micromodule et à une mise en place de ce dernier dans le corps de carte 2. Aussi, il est possible, d'une part, d'appliquer le procédé de l'invention à des cartes fabriquées antérieurement, quelque soit la date de fabrication de celles-ci et, d'autre part, de choisir le type d'isolant qui remplira les espaces vides 5.

L'introduction de l'isolant est effectuée selon une direction sécante au plan de la carte, par exemple sensiblement selon une direction 10 indiquée en figure 1, de l'extérieur de la carte, directement sur les plots de contact 6, 7.

L'isolant forme une barrière électrique entre les plots électriquement conducteurs 6 et 7. Bien entendu, il est possible d'introduire l'isolant dans les espaces vides, de manière à remplir entièrement ces espaces. Néanmoins, seuls les chants des plots 6 et 7 doivent être recouverts de l'isolant.

L'invention propose avantageusement l'utilisation d'un isolant liquide, qui se dispensera alors plus facilement dans l'espace qui lui est destiné. Ce liquide est avantageusement un liquide polymérisant. Ainsi, une fois polymérisé, l'isolant restera dans les espaces vides 5, en position fixe et stable.

Selon l'invention, après avoir introduit l'isolant dans les espaces vides 5, on élimine l'isolant en excès, ayant partiellement recouvert la surface des plots 6 et 7 et/ou de la carte 1.

On dépose ainsi avantageusement, sur le dessus des plots de contact 6, 7, une quantité d'isolant supérieure à la quantité nécessaire pour remplir les espaces vides 5 (cf. figure 4).

Ainsi, les espaces vides 5 sont bien remplis, et des bulles d'air, qui auraient pu se former lors de la dispense de l'isolant dans les espaces 5, sont chassées vers la surface de la carte. Cependant, l'isolant en excès couvre partiellement les plots de contact, voire une partie de la carte elle-même. Le problème de l'élimination de l'isolant en excès se pose alors.

Si on élimine l'isolant en excès alors qu'il est sous forme liquide avec une faible viscosité, cette élimination ne pourra être que partielle. En effet, l'isolant liquide aura tendance à s'étaler sur les métallisations et à la surface de la carte. De plus, il s'introduira dans les micro-aspérités du métal ou de la surface de la carte, ce qui pourra causer ultérieurement des difficultés dans la connexion électrique avec l'appareil de lecture/écriture, et ce qui donnera aux cartes un aspect inesthétique.

De même, l'élimination de l'isolant en excès après complète polymérisation est peu favorable. En effet, l'isolant est alors à l'état solide. L'élimination doit donc être effectuée avec force, par exemple, par grattage intensif, et éventuellement, par dissolution aux solvants, avec toutes les conséquences que cela comporte sur la carte obtenue : par exemple, une légère érosion de l'isolant en surface dans les espaces vides remplis.

Dans un mode de réalisation de l'invention, l'élimination de l'isolant en excès est avantageusement effectuée alors que celui-ci n'est plus complètement sous forme liquide, avant sa totale polymérisation, dans une étape dite de prépolymérisation. A ce moment, l'isolant a un aspect pâteux, et sa viscosité est élevée.

Différents modes de réalisation conviennent à la mise en oeuvre de l'invention.

Un premier mode de réalisation de l'invention propose de procéder en une étape principale de pulvérisation de l'isolant à partir, par exemple, d'une bombe aérosol et, éventuellement, au travers d'un masque comportant le dessin des espaces à remplir, sur les plots de contact 6, 7.

Un autre mode de réalisation propose de procéder en deux étapes principales, selon lesquelles on dépose une couche d'isolant sur les plots de contact 6 et 7, et on racle la surface de ces plots. On obtient alors une carte à mémoire dans laquelle les espaces vides 5 sont entièrement remplis d'isolant 9, ainsi que cela est représenté en figure 3.

L'isolant peut être, par exemple, un silicone tel que celui qui est commercialisé sous la référence RTV TOSHIBA TSE 326. Cet isolant a l'avantage d'être liquide à température ambiante, et d'avoir une température de polymérisation de l'ordre de 65°C. On procède au dépôt de la couche d'isolant alors qu'il est sous forme liquide, par exemple, à la température ambiante. Par contre, l'étape de raclage est effectuée après être passé à une température proche de 65°C. En effet, on obtiendra alors l'état de pré-polymérisation requis pour l'élimination adéquate du surplus d'isolant. La polymérisation sera totale et définitive après repassage en température pendant une durée suffisante.

Par ailleurs, un autre mode de réalisation de l'invention propose l'introduction directe de l'isolant 8 dans les espaces vides 5, par injection. On obtient alors une carte à mémoire, dans laquelle les espaces vides 5 sont entièrement remplis de l'isolant 9, ainsi que cela est représenté en figure 3. L'injection est mise en oeuvre en utilisant un moule qui est disposé au-dessus des espaces vides.

L'isolant est alors uniquement introduit dans ces espaces vides. La matière dispensée à la surface des plots de contact 6 et 7, est quantitativement, pratiquement nulle.

Un autre mode de réalisation de l'invention propose d'introduire l'isolant 9 dans les espaces vides 5 en utilisant la technique de sérigraphie. On obtient alors une carte à mémoire, dans laquelle les espaces vides 5 sont partiellement remplis de l'isolant 9, ainsi que cela est représenté en figure 4.

Cette technique est mise en oeuvre à l'aide d'un écran qui comporte des mailles. Ces mailles définissent l'image que l'on veut imprimer sur la carte, c'est-à-dire l'ensemble des espaces vides. On applique l'écran sur la carte. A l'aide d'une raclette, on étale un vernis isolant sur le cadre. Le vernis passe au travers des mailles, et se dépose directement dans les espaces vides 5, entre les chants des plots de contact 6 et 7. Il se dépose en quantité suffisante pour recouvrir le fond de l'espace vide 5. Dans le cas où le pouvoir mouillant du vernis est suffisamment fort, celui-ci adhère aux parois formant les chants des plots en vue de les recouvrir. Par ailleurs, il est particulièrement avantageux, afin d'éviter tout risque d'une insuffisance dans le recouvrement des chants des plots 6 et 7, de sur-dimensionner légèrement les mailles au travers desquelles se fait l'impression.

Pour la mise en oeuvre de ce mode de réalisation, le vernis isolant peut être, par exemple, un vernis tel que celui qui est commercialisé sous l'appellation COATS XZ15, qui possède un pouvoir mouillant acceptable convenant avantageusement à la technique de sérigraphie.

Un autre mode de réalisation de l'invention propose d'introduire l'isolant 9 dans les espaces vides 5, en procédant par gravure inverse. On obtient alors une carte à mémoire, dans laquelle les espaces vides 5 sont, par exemple, partiellement remplis de l'isolant 9, ainsi que cela est représenté en figure 4.

La mise en oeuvre de ce mode de réalisation s'effectue avantageusement à la suite des différentes étapes décrites dans le préambule de la description, relativement à la technique de gravure. Selon la technique de gravure inverse, une fois que l'on a obtenu l'ensemble des plots conforme au masque utilisé dans la méthode de gravure, on dépose sur cet ensemble, une couche de matériau photo-résistant que l'on insole au travers d'un masque complémentaire de l'ensemble des espaces vides que l'on cherche à remplir d'isolant. Après révélation puis attaque chimique, on obtient une structure dans laquelle le matériau photo-résistant remplit les espaces vides et recouvre les chants des plots qui se font face dans ces espaces.

Le matériau photo-résistant isolant peut être, par exemple, un matériau tel que celui qui est commercialisé par MAC DERMITE, sous l'appellation MACUMASK, ou alors un film photo-imageable commercialisé sous l'appellation PROBIMER 52.

Enfin, un autre mode de mise en oeuvre de l'invention propose de procéder, pour l'introduction de l'isolant 8 dans les espaces vides 5, par tampographie. On obtient alors une carte à mémoire, dans laquelle les espaces vides 5 sont, par exemple, partiellement ou entièrement remplis d'isolant 9, ainsi que cela est représenté dans les figures 3 et 4.

Ces différents modes de mise en oeuvre de l'invention précités ne sont pas limitatifs de l'invention. Chacun d'entre eux présente l'avantage de pouvoir être appliqué à la fabrication de cartes à plots protégés, en grande série.

## Revendications

1. Procédé de protection des plots de contact (6, 7) électriquement conducteurs d'une carte à mémoire (1), lesdits plots de contact (6, 7) étant disposés côte-à-côte, affleurant à la surface de ladite carte (1), et séparés les uns des autres par des espaces vides (5), caractérisé en ce qu'on introduit un isolant (9) dans chacun de ces espaces vides (5), de manière à recouvrir les chants des plots de contact (6, 7) qui se font face dans ces espaces (5).

2. Procédé selon la revendication 1, caractérisé en ce que l'isolant est introduit sur le dessus des plots de contact (6, 7).

3. Procédé selon l'une des revendications 1 ou 2, caractérisé en ce qu'on introduit l'isolant (9) dans les espaces vides (5), de manière à remplir entièrement ces espaces vides (5) de l'isolant (9).

4. Procédé selon l'une des revendications 1, 2 ou 3, caractérisé en ce que l'isolant (9) introduit est un liquide polymérisant.

5. Procédé selon la revendication 4, caractérisé en ce qu'on élimine l'isolant (9) en excès, ayant au moins partiellement couvert la surface des plots de contact (6, 7) et/ou de la carte (1), avant sa complète polymérisation, dans un état de pré-polymérisation.

6. Procédé selon l'une des revendications précédentes, caractérisé en ce qu'on dépose une couche d'isolant (9) sur les plots de contact (6, 7), et en ce qu'on racle la surface de ces plots (6, 7).

7. Procédé selon l'une des revendications 1 à 6, caractérisé en ce que l'isolant (9) est introduit par pulvérisation sur les plots de contact (6, 7).

8. Procédé selon l'une des revendications 1 à 6, caractérisé en ce qu'on introduit l'isolant (9) dans les espaces vides (5), par injection.

9. Procédé selon l'une des revendications 1 à 6, caractérisé en ce qu'on introduit l'isolant (9) dans les espaces vides (5) en utilisant la technique de sérigraphie.

10. Procédé selon la revendication 8, caractérisé en ce qu'on réalise la sérigraphie en sur-dimensionant légèrement l'image des espaces vides (5) à imprimer.

11. Procédé selon l'une des revendications 8 et 9, caractérisé en ce que l'isolant (9) a un pouvoir mouillant suffisamment fort.

12. Procédé selon l'une des revendications 1 à 6, caractérisé en ce qu'on introduit l'isolant (9) dans les espaces vides (5), en procédant par gravure inverse.

13. Procédé selon l'une des revendications 1 à 6, caractérisé en ce que l'on procède par tampographie.

14. Procédé selon l'une des revendications précédentes, caractérisé en ce que l'isolant (9) est introduit dans une étape ultérieure à la fabrication du micromodule et à une mise en place de ce dernier dans le corps de carte (2).

## Patentansprüche

1. Verfahren zum Schutz von elektrisch leitfähigen Kontaktfeldern (6, 7) einer Speicherkarte (1), wobei die Kontaktfelder (6, 7) aneinander angrenzend angeordnet sind, aus der Oberfläche der Karte (1) heraustreten und durch Leerräume (5) voneinander getrennt sind, **dadurch gekennzeichnet, dass** man einen Isolator (9) in jeden dieser Leerräume (5) einbringt, auf solche Weise, dass die Kanten der Kontaktfelder (6, 7), die sich in den Räumen (5) gegenüber stehen, bedeckt sind.

2. Verfahren nach Anspruch 1, **dadurch gekennzeichnet, dass** der Isolator eingeführt wird auf das Oberteil der Kontaktfelder (6, 7).

3. Verfahren nach einem der Ansprüche 1 oder 2, **dadurch gekennzeichnet, dass** man den Isolator (9) auf solche Weise in die Leerräume (5) einführt, dass die Leerräume (5) durch den Isolator (9) vollständig gefüllt werden.

4. Verfahren nach einem der Ansprüche 1, 2 oder 3, **dadurch gekennzeichnet, dass** der eingeführte Isolator eine polymerisierende Flüssigkeit ist.

5. Verfahren nach Anspruch 4, **dadurch gekennzeichnet, dass** man den überschüssigen Isolator (9), der zumindest teilweise die Oberfläche der Kontaktfelder (6, 7) und/oder der Karte (1) bedeckt hat, in einem Vorpolymerisationszustand vor der vollständigen Polymerisierung entfernt.

6. Verfahren nach einem der vorangegangenen Ansprüche, **dadurch gekennzeichnet, dass** man eine Isolierschicht auf die Kontaktfelder (6, 7) aufbringt, und dass man die Oberfläche der Felder (6, 7) rakelt.

7. Verfahren nach einem der Ansprüche 1 bis 6, **dadurch gekennzeichnet, dass** der Isolator (9) durch Pulverisierung auf die Kontaktfelder (6, 7) eingebracht wird.

8. Verfahren nach einem der Ansprüche 1 bis 6, **dadurch gekennzeichnet, dass** man den Isolator (9) durch Injektion in die Leerräume (5) einbringt.

9. Verfahren nach einem der Ansprüche 1 bis 6, **dadurch gekennzeichnet, dass** man den Isolator (9) unter Verwendung der Siebdrucktechnik in die Leerräume (5) einbringt.

10. Verfahren nach Anspruch 8, **dadurch gekennzeichnet, dass** man den Siebdruck dadurch verwirklicht, dass man das zu druckende Bild der Leerräume (5) leicht überdimensioniert.

11. Verfahren nach einem der Ansprüche 8 oder 9, **dadurch gekennzeichnet, dass** der Isolator (9) eine ausreichend starke Benetzungsfähigkeit hat.

12. Verfahren nach einem der Ansprüche 1 bis 6, **dadurch gekennzeichnet, dass** man den Isolator (9) durch Verarbeitung mit inverser Gravur in die Leerräume (5) einbringt.

13. Verfahren nach einem der Ansprüche 1 bis 6, **dadurch gekennzeichnet, dass** man ihn durch Tampographie verarbeitet.

14. Verfahren nach einem der vorangegangenen Ansprüche, **dadurch gekennzeichnet, dass** der Isolator (9) in einem Schritt eingeführt wird, der nach der Herstellung des Mikromoduls liegt und nach der Anbringung des letzteren im Körper der Karte (2).

## Claims

1. Process to protect contact pads (6, 7) electrical conductors of a memory card (1), the said contact pads (6, 7) being arranged side by side, flush with the surface of the said card (1) and separated from each other by empty spaces (5), characterised in that an insulating agent (9) is introduced into each of these empty spaces (5) so as to cover the edges of the contact pads (6, 7) which face each other in these spaces (5)

2. Process according to claim 1, characterised in that the insulating agent is introduced on the top of the contact pads (6, 7)

3. Process according to one of claims 1 or 2,
characterised in that the
insulating agent (9) is introduced into the empty spaces (5) so that these empty spaces (5) are entirely filled with the insulating agent (9)

4. Process according to one of claims 1, 2 or 3,
characterised in that the
insulating agent (9) used is a polymerising liquid

5. Process according to claim 4, characterised in that any excess insulating agent (9) is eliminated, having at least partially covered the surface of the contact pads (6, 7) and/or of the card (1) before final polymerisation, in a state of partial polymerisation

6. Process according to one of the above claims,
characterised in that
a film of insulating agent (9) is deposited on the contact pads (6, 7) and in that the surface of these pads (6, 7) is scraped

7. Process according to one of claims 1 to 6,
characterised in that the insulating agent (9) is introduced onto the contact pads (6, 7) by spraying

8. Process according to one of claims 1 to 6,
characterised in that the insulating agent (9) is introduced into the empty spaces (5) by injection

9. Process according to one of claims 1 to 6,
characterised in that the insulating agent (9) is introduced into the empty spaces (5) using the silk-screen printing technique

10. Process according to claim 8, characterised in that the silk-screen printing is carried out by slightly over-dimensioning the image of the empty spaces (5) to be printed

11. Process according to one of claims 8 and 9,
characterised in that the insulating agent (9) has sufficient wetting power

12. Process according to one of claims 1 to 6,
characterised in that the insulating agent (9) is introduced into the empty spaces (5) using inverse engraving

13. Process according to one of claims 1 to 6,
characterised in that tampography is used

14. Process according to one of the above claims,
characterised in that the insulating agent (9) is introduced at a stage after fabrication of the micromodule and after the latter has been inserted in the body of the card (2)
